# NEW EUROPEAN PATENT SPECIFICATION

(11) **EP 0 194 811 B2**
(45) Date of publication and mention of the opposition decision: **11.09.1996**
(45) Mention of the grant of the patent: 06.09.1989
(21) Application number: 86301597.0
(22) Date of filing: 06.03.1986
(51) Int. Cl.: C04B 35/80, B23B 27/14

(54) **Reinforced ceramic cutting tools**
Verstärkte keramische Schneidwerkzeuge
Outils de coupe en matériau céramique renforcé

(30) Priority: 14.03.1985 US 711695; 18.02.1986 US 830773
(43) Date of publication of application: 17.09.1986
(73) Proprietor: Advanced Composite Materials Corporation, Greer South Carolina 29651 (US)
(72) Inventor: Rhodes, James F., Greer South Carolina 29651 (US); Beatty, Ronald L., Greer South Carolina 29651 (US); Dziedzic, Chester J., Greenville South Carolina 29607 (US)
(74) Representative: Frohwitter, Bernhard, Dipl.-Ing.

(56) References cited:
- GB-A- 2 157 282
- JP-A-59 102 862
- US-A- 2 979 414
- AMERICAN CERAMIC SOCIETY BULLETIN, vol. 65, no. 2, January 1986, pages 289-292, Columbus, Ohio, US; L.J. SCHIOLER et al.: "Ceramic matrix composites: A literature review"
- CHEMICAL ABSTRACTS, vol. 102, no. 20, May 1985, page 302, abstract no. 171498x, Columbus, Ohio, US; & JP-A-60 05 079 (MITSUBISHI METAL CORP.) 11-01-1985
- JOURNAL OF THE AMERICAN CERAMIC SOCIETY, vol. 67, no. 12, December 1984, pages C-267-C-269, Columbus, Ohio, US; P.F. BECHER et al.: "Toughening behavior in SiC-whisker-reinforced alumina"
- AMERICAN CERAMIC SOCIETY BULLETIN, vol. 64, no. 2, February 1985, pages 298-304, Columbus, Ohio, US; G.C. WEI et al.: "Development of SiC-whisker-reinforced ceramics"
- Tooling & Production Magazine, vol. 50, no, 12, March 1985

## Description

### FIELD OF THE INVENTION

The invention relates to ceramic cutting tools.

### BACKGROUND OF THE INVENTION

Metal cutting or "machining" is recognized to be one of the most important and most widely used processes in manufacturing. Among the common machining operations are shaping, planing, milling, facing, broaching, grinding, sawing, turning, boring, drilling and reaming. Some of these processes, such as sawing, operate on both the external and internal surfaces of the workpiece, while others operate only on the internal (e.g. reaming) or external (e.g. milling) surfaces of the workpiece. These various processes are described in detail in DeGarmo, Material and Processes in Manufacturing, 3rd edn., 1969), especially in chapter 16, "Metal Cutting".

The measure of productivity of a given machining operation is determined by the total amount of metal removed from the workpiece in a given period of time. To this end a wide variety of materials have been used or suggested as cutting tools. These are commonly classified as tool steels, high speed steels, cast non-ferrous alloys, sintered carbides and ceramics. (There are also some limited applications for diamonds). The commonly measured parameters of cutting tool performance are cutting speed, depth of cut, feed rate and tool life. Each of these prior art cutting tool materials is deficient in one or more of these parameters. Tool steel, high speed steel and cast non-ferrous alloys all have critical temperature limitations which restrict their cutting speed to relatively low rates, as measured in feet per minute (fpm) or meters per minute (m/min). Typically high speed steels are restricted to 100-225 fpm (30-70 m/min) for cutting steel and 250-300 fpm (75-90 m/min) for cutting non-ferrous materials. The cast non-ferrous alloys will operate at up to about twice those rates. The carbide materials, such as tungsten carbide, improve on the cutting speed rates of the steels by a factor of 2-5, particularly when the carbides are coated. However, the carbides are not as tough as the steels and are susceptible to impact breakage. This severely limits their usage to applications where impact is a factor, such as in making interrupted cuts or in machining hard workpieces.

Ceramic materials, such as alumina, have been found to produce cutting tools which can operate at much higher speeds than the conventional steel and carbide cutting tools. For instance, cutting speeds of 500-1400 fpm (150-430 m/min) for steel cutting have been reported. Tool life with the ceramics, however, has been a serious problem, because the ceramics are even more brittle and less tough than the carbides. Of particular concern has been the tendency of the ceramic materials to fracture catastrophically and unexpectedly when subjected to impact. Thus, while cutting speeds have been high for the ceramic materials, it has been possible to operate them only at quite low feed rates, much lower than those used for the steels and carbide cutting tools.

It has thus been found that productivity, which is a function of both cutting speed and feed rate, is relatively low for all prior art types of cutting tools. The steel and carbide tools, while having high feed rates, have relatively low cutting speeds. Conversely, the ceramics, while having high cutting speeds, operate only at low feed rates. Productivity, determined as total amount of metal removal for a given time period, therefore remains relatively low regardless of the type of cutting tool used.

References relating to the use of various ceramics as cutting tools include U.S. Patent 4 543 343 to Iyori et al which describes use of a ceramic comprised of alumina, zirconia and titanium carbide together with titanium boride. Another reference is U.S. Patent 4 366 254 which describes a cutting tool ceramic comprised of alumina and zirconia together with carbides, nitrides or carbo-nitrides of Group IVB and VB metals. Japan patent publication JP 6 005 079 reports that the addition of Si₃N₄ whiskers improves the toughness and hardness of Sialon-base ceramics and makes them useful for, inter alia, cutting tools.

There have been some teachings that silicon carbide fiber reinforced ceramics can be used in various machine parts. Examples shown have included heat exchangers, molds, nozzles, turbines, valves and gears; see Japanese patents nos. 59-54 680 and 59-102 681. Such disclosures, however, are not particularly pertinent to the cutting tool invention described herein, since such parts are not subject to impact stresses as part of their normal service environment. No mention is made of improved toughness or impact resistance nor are such properties of interest in the articles described.

It has also been disclosed that fracture toughness in ceramics can be improved by incorporation of silicon carbide whiskers into the ceramics. Two papers by Becher and Wei have described mechanisms for increase in toughness as related to whisker content and orientation; see "Toughening Behavior is SiC Whisker Reinforced Alumina", Comm. Am. Cer. Soc. (Sept. 1984) and "Transformation Toughened and Whisker Reinforced Ceramics", Soc. Auto. Engrs., Proc. 21st Auto. Tech. Dev. Mtg., 201-205 (Mar., 1984). See also Wei U.S. Patent 4 543 345. These papers, however, deal only with thermal and flexural applications and do not address anything with respect to machining processes. It would therefore be highly advantageous to have a tool which operates at the high cutting speeds of the ceramics while also allowing the high feed rates found with the steels and carbides. Such cutting tools would yield productivities significantly higher than any of the prior art tools.

According to the present invention, there is provided a cutting tool having a sintered matrix consisting essentially of alumina with silicon carbide whiskers in an amount in the range of 12 to 40 volume percent distributed therethrough and not being significantly degraded.

The invention also provides a method of cutting metal, but not steel, wherein a cutting tool is brought into contact with a metal workpiece and the cutting tool and metal workpiece move relative to each other whereby metal is removed by the cutting tool from the metal workpiece, characterized in that there is used a sintered composite cutting tool having a matrix consisting essentially of alumina with silicon carbide whiskers in an amount in the range of 12 to 40 volume percent distributed therethrough and not being significantly degraded.

The alumina may be either pure or with inclusions of modifying materials.

A formulation comprised of 25 volume percent silicon carbide whiskers in alumina matrix has been found to be a particularly outstanding ceramic cutting tool.

The invention will now be described in more detail with reference to preferred embodiments thereof and with the aid of the accompanying drawings, namely Figures 1 and 2, which graphically compare face milling results obtained with cutting tools of the invention with those obtained with conventional cutting tools.

Cutting tools represent a unique and highly specialized class of industrial articles. Cutting tool geometry is such that intense cutting stresses are localized and concentrated at the cutting edge of the tool. The work required to deform the workpiece and generate the chip, as well as the friction between the chip and the face of the cutting tool, causes considerable heat to be generated in the cutting tool. The properties of the workpiece, such as its ductility or hardness, can further intensify the stresses and operating temperatures to which the cutting tool is subject. A cutting tool, is also subject to varying degrees of impact, particularly when making intermittent cuts, but also depending on whether the workpiece tends to form continuous or discontinuous chips. A detailed discussion of these types of service conditions, as well as a description of the various tool geometries, is found in the aforementioned DeGarmo reference. Thus the critical and unique combination of operating stress, temperature and impact makes the determination of materials suitable for use as cutting tools significantly different from the determination of materials for other industrial articles such as heat exchangers or gears.

The present invention is based upon the discovery that incorporation of a defined content of a specified kind of reinforcing whiskers, namely silicon carbide whiskers, in a specified ceramic matrix, namely alumina, yields a cutting tool structure that not only retains the high cutting speeds of prior art unreinforced ceramics but unexpectedly also permits ceramics to operate at the high feed rates previously obtainable only with the steels and carbides, and even with the latter only at the cost of greatly reduced cutting speed.

The alumina employed as the matrix may be used either alone (i.e. containing no other materials except recognised impurities) or it may be combined or "doped" with minor amounts (i.e. less than, about 30%) of toughening components such as zirconia, yttria, hafnia, magnesia, silicon nitride and titanium carbide or mixtures thereof. The Becher et al SAE paper cited above shows typical compositions containing up to 30 volume percent zirconia, with the zirconia incorporating up to 3 mole percent yttria.

The reinforcing whiskers used are silicon carbide whiskers. Both the alpha and beta formes of silicon carbide whiskers are available commercially and can be employed. The whiskers used in this invention have a single crystal or monocrystalline structure. A particularly preferred commercial source is those silicon carbide whiskers produced and marketed by the Advanced Materials group of ARCO Chemical Company. Such whiskers are produced from rice hulls and typically have average diameters on the order 0.6 µm and aspect ratios on the order of 15-150. Strengths are typically on the order of 1 million psi (70,000 kg/cm²) and tensile moduli on the order of 60-100 million psi (4-7 million kg/cm²). The silicon carbide whiskers are thermally stable to 3200°F (1760°C).

For an additional description of single crystal whiskers see Katz, H.S. and Milewski, J.V., Handbook of Fillers and Reinforcements for Plastics, pages 446-464 (C. 25) (Von Nostrand Reinhold Co., N.Y. 1978).

Short fiber materials of the polycrystalline type are to be distinguished from the single crystal whiskers used in this invention. The polycrystalline filaments or chopped fibers are much larger in diameter e.g., 10 microns or larger. As taught in the Wei patent referred to above, the polycrystalline fibers "suffer considerable degradation due to grain growth at temperatures above about 1250°C which severely limited their use in high temperature fabrication processes such as hotpressing for producing ceramic composites of nearly theoretical density. Further, during high pressure loadings such as encountered during hot pressing, the polycrystalline fibers undergo fragmentation which detracts from the reinforcing properties of the fibers in the ceramic composite. Also, these polycrystalline fibers provided insufficient resistance to cracking of the ceramic composite since the fibers extending across the crack line or fracture plane possess insufficient tensile strength to inhibit crack growth through the composite especially after the composite has been fabricated by being exposed to elevated pressures and temperatures in hot pressing."

Also see Milewski, J.V. "Short-Fiber Reinforcements: Where The Action Is", Plastics Compounding, November/December 1979, pages 17-37. A clear distinction is drawn between single crystal "Whiskers" and polycrystalline "microfibers" on pages 17-19.

It will be understood that the whiskers must be bound in the matrix in a manner so as to produce reinforcement of the matrix. The particular nature of bonding reinforcement is imperfectly known. However, the general considerations for good reinforcement have been described by a number of investigators. One concise description is found in Katz et al, Handbook of Fillers and Reinforcements for Plastics, 454-457 (1978).

We have found that bonding is satisfactory and good reinforcement is obtained for the cutting tools of the present invention when the ceramic whisker content is in the range of from 12 - 40 % volume percent of the whisker/matrix composite. (This of course results in the percentage of matrix material being 60 - 88 %.) Above about 40 % whisker content the addition of whiskers becomes detrimental to the toughness. It is believed that this may be due either to the whisker content becoming sufficiently large that zones of whisker concentration themselves have a limited toughness or that the ceramic matrix develops points at which the matrix cohesiveness is reduced.

The preferred ranges of whisker content will depend on the type of cutting services for which the tool is designed. Where the ceramic force is applied in a more interrupted or intermittent manner, the higher contents (e.g. 20 - 35 %) are more preferred. A cutting tool comprised of about 25 volume percent silicon carbide whiskers in alumina matrix provides especially outstanding performance. It will be recognized that there may by a certain amount of routine experimentation required to determine the optimum content for a given end use; however, such should be easily performed by one skilled in the art.

Typical examples of tools of this invention are illustrated in Table I. The data in Table I were derived from an experiment in which fracture toughness (K_{c}) was measured for samples composed of alumina matrix containing the ARCO Chemical Company silicon carbide whiskers.

**Table 1**

| Whisker Content, vol. pct. | Fracture Toughness, M Pa √m |
|---|---|
| 0 | 4.15 |
| 18 | 6.9 |
| 24 | 8.9 |
| 30 | 8.7 |
| 35 | 7.6 |

For instance, ceramic matrices composed of alumina doped with titanium carbide have fracture toughness on the order of 1.5 times greater than the fracture toughness of alumina matrices. It is anticipated that the same degree of fracture toughness improvement with whisker reinforcement as shown for alumina in Table I would also apply to the alumina/titanium carbide matrices.

The ceramic cutting tools of this invention are formed by first blending the proper proportions of the ceramic matrix material in powdered form with the ceramic whiskers. A wide variety of sytems are known for mixing of particulate solids. Typical are those described in Perry et al, Chemical Engineers' Handbook, 21-30 to 21-36 (5th edn., 1973). The blending must be such that the whiskers are thoroughly dispersed throughout the particulate ceramic matrix material, but not be so severe that the whiskers are significantly degraded. A presently preferred method is described in U.S. Patent 4,463,058.

Once the ceramic matrix material and the ceramic whiskers are thoroughly blended, the formation of the composite cutting tools then proceeds in the same manner as formation of conventional unreinforced ceramic tools. Typically the tools are formed by molding under pressures of 3,000-60,000 psi (200-4200 kg/cm²) and either simultaneously or subsequently sintered at temperatures on the order of 1500-3200°F (800-1750°C). The particular shape molded will of course depend on the intended function of the cutting tool.

The improved ceramic tools of this invention have a high degree of toughness and wear resistance. In especially preferred practice, the cutting tools are replaceable inserts of the standard geometry employed in the cutting industry for such varied cutting tool and cutting tool insert applications as turning, facing, milling, boring, and the like. Machining processes employing the cutting tools of this invention are generally described in "Practical Machining Principles for Shop Application" by Metcut Research Associates, Inc. (1981) 3980 Rosslyn Drive, Cincinnati, Ohio 45209 incorporated herein by reference.

The markedly-improved products of this invention are illustrated in Table 2 below. In these examples various types of ceramic cutting tools were used for slab mill cutting of cast iron at a rate of 2,000 surface feet/minute (600 surface meters/minute) using 0.040 inch (1.0 mm) depth of cut. The "tool life" indicates the number of inches of metal cut before the tool failed by breakage.

**Table 2**

| CuttingTool Composition | (Tool Life) (Inches Cut) | Tool Life mm Cut |
|---|---|---|
| Alumina/TiC | (22) | 559 |
| Silicon Nitride/TiC | (42) | 1067 |
| Silicon Nitride/(SIALON) | (44) | 1118 |
| Alumina/25% SiC Whiskers | (504(a)) | 12802 |

| | | |
|---|---|---|
| (a) test terminated; no tool failure. | | |

It will be immediately evident that the reinforced tool provided more than an order of magnitude improvement in tool life, which leads to greatly increased productivity, even though the test with the reinforced tool was terminated short of tool failure. While some steel and carbide cutting tools can provide long tool lives, none of them can operate at the high cutting speeds that the ceramics can. On the other hand, the data of Table 2 clearly show that the unreinforced ceramics, while operating at the high cutting speed, have unacceptably short tool lives. The reinforced cutting tools of the present invention, however, clearly combine the best properties of both types of prior art tools without the deficiencies of either one.

In further illustration of the invention, cutting tool inserts comprised of alumina matrix containing varying amounts of silicon carbide whiskers were prepared and tested in face milling tests. For comparison conventional inserts were also prepared and tested.

The inserts of the invention were formed by thoroughly blending finely powdered alumina with the appropriate quantity of the silicon carbide whiskers used in the preceding example and hot pressing the blend at 27.5 × 10⁶Pa (280 kg/cm²) and 1850°C and 1 hour to form an insert blank having a theoretical density in excess of 99%. The blanks were finished ground to form SNG-432 shape ceramic cutting inserts.

The face milling tests were performed on a Cincinnati No. 5 vertical milling machine. This machine was equipped with a 29.8 kW (40-horsepower) D.C. variable speed drive motor for the spindle and a 7.46 kW (10-horsepower) A.C. variable speed drive motor for the table feed.

The work material was Class 30 gray cast iron. The configuration of the turning workpiece was 305 mm (12 inch) O.D. by 203 mm (8 inch) I.D. by 330 mm (13 inch) long. These tubes had a hardness of 179 BHN. The bars used for the single-tooth milling test were 50.8 mm (2 inches) by 101.6 mm (4 inches) by 305 mm (12 inches). The surface scale was removed from all test workpieces before any tests were performed. All the tools, except tool insert A had an edge preparation of 0.15 mm (0.006 inch) by 30°. Tool insert A edge preparation was 0.15 mm (0.006 inch) by 20°. The tests with all tools were stopped when the wear on the side cutting edge was 0.010 inch (0.254 mm) uniform wear, 0.020 inch 0.51 mm localised wear, or tool failure.

| Conditions of milling were as follows:- | |
|---|---|
| Cutting speeds: | 2000 and 6000 feet/minute (10.2 and 30.5 m/sec) |
| Feeds: | 0.040, 0.080, and 0.100 inch/tooth (1.0, 2.0 and 2.5 mm/tooth) |
| Depth of Cut:: | 0.050 inch (1.27 mm) |
| Width of Cut: | 4.0 inch (101.6 mm) |
| Set up: | On center |
| Cutting Fluid: | Dry |
| Work Material: | Class 30 Gray Cast Iron, 179 BHN |
| Tool Material: | SNG-432 inserts |

| Geometry: | |
|---|---|
| Axial Rake: -5° End Cutting Edge Angle: | 15° |
| Radial Rake: -5° Radial Relief: | 5° |
| Corner Angle: -15° Nose Radius: | 0.03 inch (0.76 mm) |
| Radial Depth of Cut: | 4.0 inches (101.6 mm) |
| Axial Depth of Cut: | 0.050 inch (1.27 mm) |
| Set up: | On center |
| Cutting Fluid: | Dry |
| Tool Life End Point: | 0.010 inch (0.25 mm) uniform wear |
| | 0.020 inch (0.51) localised wear |
| | tool failure |

The results of the single-tool face milling tests are presented in Table 3 and in Figures 1 and 2. These tests are designed to evaluate the toughness of the cutting tools. The cutting speed was set at a constant 2000 feet/minute (10.2 m/sec). The initial chip load was 0.040 inch/tooth (1 mm/tooth). The depth of cut and width of cut were 0.050 inch (1.27 mm) and 4.0 inches (101.6 mm), respectively. At this set of conditions, the Si₃N₄/30% TiC, the Si₃N₄/alumina and the aluminum/30% TiC inserts broke after 1118, 1067 and 686 mm (44, 42 and 27 inches) of work travel.

All the other tools were tested until a minimum of 2743 mm (108 inches) of work travel was achieved without breakage. The chip load was then increased to 0.080 inch/tooth (2.0 mm/tooth), and the remaining five tools were tested. The results are presented in Figure 1.

The 25% SiC whisker insert of the invention had 336 inches of work travel without breaking. An additional test was performed to verify this result. The second test was stopped at 3023 mm (119 inches) of work travel without breaking. This tool was then tested at a chip load of 0.100 inch/tooth (2.54 mm/tooth). At this chip load, it was tested for 5182 mm (204 inches) of work travel before the test was stopped without breaking. All other tools broke at the 0.080 inch/tooth (2.0 mm/tooth) chip load. These tools were also tested at 6000 feet/minute (30.5 m/sec) and 0.005 and 0.010 inch/tooth (0.127 and 0.254 mm/tooth) feeds.

The results of these tests are presented in Table 3 and as tool life versus feed curves in Figure 2. The superiority of the cutting tools of this invention over comparable commercial tools is apparent. 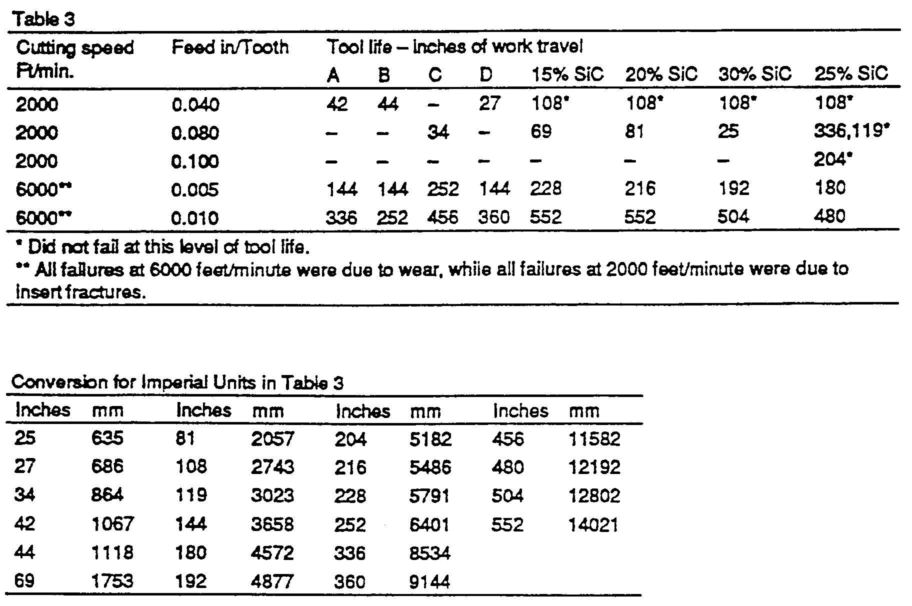
A-Commercial Si₃N₄/Alumina insert
B-Commercial Si₃N₄/30% TiC insert
C-Commercial Si₃N₄ insert
D-Commercial alumina/30% TiC insert

To further demonstrate the advantages achieved with the cutting tools of this invention as compared with conventional cutting, additional runs were made, the results of which are presented below. In the following, the 25% SiC insert was a 25 volume % silicon carbide whisker in alumina matrix material prepared by the procedure given in the preceding example. Insert E was a conventional alumina (4% zirconia) insert, and insert G was a conventional Si₃N₄ insert with added A1N, A1₂0₃ and Y₂0₃ sintering aids. The inserts are compared in a number of different cutting applications.

### Facing of cast iron

Work material: Cast iron Meehanite GC, Hardness 185 HV
Insert style: SNGN 120416 T
Tool life criterion: 1 mm maximum flank wear or premature fracture

### Cutting data

Feed: 0.2 mm/rev
Depth of cut: 2 mm
Speed: 700 m/min and 450 m/min

| Result: | | | | |
|---|---|---|---|---|
| Grade | 700 m/min | | 450 m/min | |
| | R | S | R | S |
| 25% SiC | 1.69 | 42 | 1.52 | 54 |
| E | 1.07 | 104 | 0.080 | 113 |
| G | 1.00 | 97 | 1.00 | 57 |
| R = Edge life ranking S - Edge life scatter = Maximum - minimum lifetime in % of mean life time | | | | |

The 25% SiC whisker reinforced alumina insert of the invention showed increased lifetime and reduced lifetime scatter compared to a alumina ceramic E and silicon nitride ceramic G in this intermittent cutting operation.

### Fracture resistance in intermittent cutting of nodular cast iron

Work material: Nodular cast iron SS 0737-00, Hardness 270 HB
Insert style: SNGN 120416T
Tool life criterion: Bulk fracture

### Cutting data

Feed 0.38 mm/rev
Depth of cut: 3 mm
Speed: 500 m/min

| Result | |
|---|---|
| Grade | Relative tool life |
| 25% SiC | 1.24 |
| G | 1.00 |
| E | Not tested - too severe conditions |

The insert of the invention was a tougher material than insert G in intermittent cutting of cast iron. In this test the work material is designed to exert very strong intermittent forces and thermal cycling of the tool tip. Alumina ceramics are less tough than silicon nitride ceramics. Thus, the SiC whisker reinforced ceramic is strengthened to a toughness behavior superior to silicon nitride while retaining the wear resistance of alumina.

### Turning of heat resistant alloy Inconel 718

Work material: Inconel 718, Solution treatet and aged
Insert style: SNGN 120412E
Tool life criterion: Flank wear and/or rake face flaking

| Cutting data | | | | |
|---|---|---|---|---|
| Feed, mm/rev | 0.25 | 0.15 | 0.15 | |
| Depth of cut, mm | 2 | 2 | 2 | |
| Speed, m/min | 180 | 180 | 130 | |
| | Flood coolant in all tests | | | |

| Result | | | | |
|---|---|---|---|---|
| Grade | Mean edge life ranking | Mean flank wear resistance ranking 1) | Mean depth of cut notch resistance ranking 1) | Mean trailing edge notch wear resistance ranking 1) |
| 25% SiC | 1.68 | 1.24 | 1.09 | 2.00 |
| G | 1.00 | 1.00 | 1.00 | 1.00 datum |

| | | | | |
|---|---|---|---|---|
| 1) Wear resistance = 1/wear rate. | | | | |

The SiC whisker reinforced insert performed better than insert G and had a high degree of security and wear resistance.

### Turning of heat resistant alloy Incloy 901

Work material: Incoloy 901 Solution treatet and aged
Insert style: SNGN 120412E
Tool life criterion: Flank wear and/or rake face flaking

| Cutting data | | | | |
|---|---|---|---|---|
| Feed, mm/rev | 0.15 | 0.25 | 0.15 | |
| Depth of cut, mm | 2 | 2 | 2 | |
| Speed, m/min | 310 | 180 | 180 | |
| | Flood coolant in all tests | | | |

| Result | | | | |
|---|---|---|---|---|
| Grade | Mean edge life ranking | Mean flank wear resistance ranking 1) | Mean depth of cut notch resistance ranking 1) | Mean trailing edge notch wear resistance ranking 1) |
| 25% SiC | 1.04 | 1.04 | 0.78 | >>1 (no wear) |
| G | 1.00 | 1.00 | 1.00 | 1.00 datum |

| | | | | |
|---|---|---|---|---|
| 1) Wear resistance = 1/wear rate. | | | | |

The SiC whisker reinforced insert was suitable for the turning of Incoloy 901 and had a slightly better edge life than G. A great advantage is that the lack of trailing edge notch wear consistently maintains a good surface finish.

The industrial applicability of the present invention lies in the field of metal cutting. The cutting tools of the present invention can be used in virtually any industrial field in which metal cutting is a factor. Typical of the industries in which these cutting tools would be advantageous are the automotive, aircraft, structural metals and general metal working industries.

It will be evident that there is a wide variety of embodiments of the present invention which are not specifically described above but which are clearly within the scope of the present invention. The above description is therefore intended to be exemplary only and the scope of the invention is to be limited solely by the appended claims.

## Claims

1. A method of cutting metal, but not steel,
wherein a cutting tool is brought into contact with a metal workpiece
and the cutting tool and metal workpiece move relative to each other
whereby metal is removed from the metal workpiece by the cutting tool having a tool life as indicated in Metres of work travel of metal cut for a specified set of cutting conditions, in particular cutting speed and feed rate.
**charcaterized in that**
there is used a sintered composite cutting tool having a matrix consisting essentially of alumina with silicon carbide whiskers in an amount in the range of 12 to 40 volume percent distributed therethrough and not being significantly degraded.

2. A method as claimed in Claim 1 characterised in that the cutting force is applied substantially continuously.

3. A method as claimed in Claim 1 or Claim 2 characterised in that said metal cutting is selected from shaping, planing, milling, facing, broaching, grinding, sawing, turning, boring, drilling and reaming.

4. A method as claimed in any one of Claims 1 to 3 characterised in that said composite contains 65-80 volume percent alumina and 20-35 volume percent whiskers.

5. A whisker-reinforced ceramic cutting tool, not for cutting steel,
having a tool life as indicated in Metres of work travel of metal cut for a specified set of cutting conditions, in particular cutting speed and feed rate,
characterized in that it is formed of a sintered matrix consisting essentially of alumina

6. A cutting tool as claimed in Claim 5 characterised in that said composite contains 65-80 volume percent alumina and 20-35 volume percent whiskers.

## Patentansprüche

1. Verfahren zur spanabhebenden Bearbeitung von Metall, aber nicht Stahl, bei welchem ein Bearbeitungswerkzeug in Berührung mit einem metallischen Werkstück gebracht wird, und sich das Bearbeitungswerkzeug und das metallische Werkstück relativ zueinander bewegen,
wodurch Metall von dem metallischen Werkstück durch das Bearbeitungswerkzeug entfernt wird, das eine Standzeit aufweist, die in Metern des Bearbeitungswegs des Metallschnitts angegeben wird für einen bestimmten Satz von Arbeitsbedingungen, insbesondere Bearbeitungsgeschwindigkeit und Vorschubrate,
dadurch gekennzeichnet, daß
ein gesintertes Bearbeitungswerkzeug aus Verbundwerkstoff verwendet wird
mit einer Matrix, die im wesentlichen aus Aluminiumoxid
mit hierin verteilten Siliziumkarbid-Whiskerkristallen in einer Menge im Bereich von 12 bis 40 Volumenprozent besteht, die nicht signifikant beschädigt sind.

2. Verfahren nach Anspruch 1, dadurch gekennzeichnet, daß die Bearbeitungskraft im wesentlichen kontinuierlich angelegt wird.

3. Verfahren nach Anspruch 1 oder 2, dadurch gekennzeichnet, daß die spanabhebende Metallbearbeitung aus Schnellhobeln, Hobeln, Fräsen, Plandrehen, Räumen, Schleifen, Sägen, Drehen, Bohren aus dem Vollen und Aufreiben ausgewählt ist.

4. Verfahren nach einem der Ansprüche 1 bis 3, dadurch gekennzeichnet, daß der Verbundwerkstoff 65 bis 80 Volumenprozent Aluminiumoxid und 20 bis 35 Volumenprozent Whiskerkristalle enthält.

5. Durch Whiskerkristalle verstärktes keramisches spanabhebendes Werkzeug, nicht zur Bearbeitung von Stahl,
mit einer Standzeit, die in Metern des Bearbeitungswegs des Metallschnitts angegeben wird für einen bestimmten Satz von Bearbeitungsbedingungen, insbesondere Bearbeitunsgeschwindigkeit und Vorschubrate,
dadurch gekennzeichnet, daß
es aus einer gesinterten Matrix hergestellt ist, die im wesentlichen aus Aluminiumoxid
mit hierin verteilten Siliziumkarbid-Whiskerkristallen in einer Menge im Bereich von 12 bis 40 Volumenprozent besteht, die nicht signifikant beschädigt sind.

6. Spanabhebendes Werkzeug nach Anspruch 5, dadurch gekennzeichnet, daß der Verbundwerkstoff 65 bis 80 Volumenprozent Aluminiumoxid und 20 bis 35 Volumenprozent Whiskerkristalle aufweist.

## Revendications

1. Méthode pour couper du métal, mais non pas acier, selon laquelle un outil tranchant est mis au contact d'une pièce d'ouvrage en métal et l'outil tranchant et la pièce d'ouvrage en métal sont déplacés l'un par rapport à l'autre de telle sorte que du métal est éliminé de la pièce d'ouvrage en métal par l'outil tranchant qui a une durée de vie indiquée en mètres de chemin d'ouvrage d'un métal coupé pour un ensemble de conditions de coupage spécifié, particulièrement la vélocité de coupage et la vitesse d'approche,
caractérisée en ce
qu'on utilise un outil tranchant en composite fritté ayant une matrice consistant essentiellement en alumine dans laquelle sont distribués des whiskers de carbure de silicium en des quantités dans la gamme de 12 à 40% en volume n'étant pas dégradés significamment.

2. Méthode suivant la revendication 1,
caractérisée en ce
que la force de coupe est appliquée de façon practiquement continue.

3. Méthode suivant la revendication 1 ou la revendication 2,
caractérisée en ce
que ce coupage de métal est choisi parmi le façonnage, le rabotage, le fraisage, la rectification, l'alésage, le moulage, le sciage, le tournage, l'étirage, le pressage et le calibrage.

4. Méthode suivant l'une quelconque des revendications 1 à 3,
caractérisée en ce
que ce composite contient de 65 à 80% en volume d'alumine et de 20 à 35% en volume de whiskers.

5. Outil tranchant en céramique armée de whiskers, ne trachant pas d'acier qui a une durée de vie indiquée en mètres de chemin d'ouvrage d'un métal coupé pour un ensemble de conditions de coupage spécifié, particulièrement la vélocité de coupage et la vitesse d'approche,
caractérisé en ce
qu'il est formé d'une matrice frittée consistant essentiellement en alumine dans laquelle sont distribués des whiskers de carbure de silicium en une quantité dans la gamme de 12 à 40% en volume n'etant pas dégradés significamment.

6. Outil tranchant suivant la revendication 5,
caractérisé en ce
que ce composite contient de 65 à 80% en volume d'alumine et de 20 à 35% en volume de whiskers.
